# EUROPEAN PATENT APPLICATION

(11) **EP 1 707 772 A1**
(43) Date of publication of application: **04.10.2006**
(21) Application number: 04805131.2
(22) Date of filing: 30.12.2004
(51) Int. Cl.: F01M 11/04, F01M 11/12, G01F 23/04

(54) **DEVICE FOR FILLING AND CHECKING THE OIL LEVEL IN A COMBUSTION ENGINE BLOCK**

(30) Priority: 31.12.2003 ES 200400021 U
(71) Applicant: Iberofon Ingenieria, S.L., 19200 Azuqueca De Henares Guadalajara (ES)
(72) Inventor: Aguilar Herratz, Fernando, E-19200 Azuqueca De Henares (ES); Catalan Arias, Fausto, E-19200 Azuqueca De Henares (ES)
(74) Representative: Ungria Lopez, Javier
(86) International application number: PCT/ES2004/000589
(87) International publication number: WO 2005/064125

(57) **Abstract**

The invention relates to a device for filling and checking the oil level in a combustion engine block comprising a closure plug and an oil level measuring stick with extends from the lower face of said plug and which can penetrate the engine block. The inventive device consists of: an adapter body (1) comprising fixing means (3) which are used to connect same to the engine block (2) and an upper part (1a) having a peripheral wall (4) which defines an inner space (5), said space forming a filler neck (5a) at the top thereof and containing support means (6) for the closure plug (10); and an inner axial channel (7) having an inner diameter that is greater than that of the measuring stick (11), but smaller than that of the inner space (5), the upper end of said channel opening into the inner space (5) and the lower end thereof being connected to a filler port (2a).

## Description

This invention is encompassed within the field of the accessory elements for combustion engines, specifically within the sector of the devices for the closure openings for the filling and checking of the oil level in these engines.

### STATE OF THE ART PRIOR TO THE INVENTION

It is known that combustion engines contain oil which, during functioning, lubricate the different elements, such as the crankshaft, the rods, the liners, the pistons, the camshaft, etc. which are located inside the engine block. For filling with oil, the block has a filler opening at the top which is closed by means of a removably-mounted plug. In turn, for checking the oil level, the engine blocks have an additional opening, generally to the bottom, through which a stick is inserted into the inside of the engine block and which bears some marks identifying the maximum level and the minimum level of the oil guaranteeing proper working order.

For practical purposes, the openings for the insertion of the oil level measuring sticks entail a number of drawbacks. Hence, firstly, these openings, especially those on automobiles, are usually located in hard-to-access places on the engines, the insertion of the oil level measuring stick hence usually being bothersome and relatively complicated, additionally giving rise to the risk of the engine spewing oil through the opening due to the oil level measuring stick not being inserted properly. Secondly, the part of the oil level measuring stick which extends out past the interior must be quite long in order to allow the user to access and handle the stick, as a result of which this outer part of the stick, particularly in automobiles, competes with or at least is may interfere with other elements attached to the engine in the limited amount of space available in which the engine in situated. Fourth, the need of engine blocks having both an opening for inserting the stick for checking the oil level as well as an opening for filling oil entails the need of providing two openings in the construction and building of the engine block.

Taking into account the drawbacks stated hereinabove, devices have been designed in which the stick for checking the oil level emerges from the lower base of the plug closing the oil filling opening such that, on the plug being located on the filler opening, the stick is then located on the inside of the engine block, and when the plug is opened, the oil level measuring stick is pulled out. Although this type of devices makes it possible to check the oil level through the filler opening and to therefore do without a level check by way of a conventional insertion, they entail the drawback of the oil level measuring stick not being guided inside the engine block and special care therefore being required for the insertion thereof, given that, the stick may otherwise hit against and therefore destroy moving parts which are located inside said block.

In view of the above, it was desirable to be able to avail of a device which would make it possible to overcome the aforementioned drawbacks.

### DESCRIPTION OF THE INVENTION

This invention is for the purpose of overcoming the drawbacks previously stated hereinabove by means of a device for filling and checking the oil level in a combustion engine block comprising a closure plug from the underside of which an oil measuring stick emerges which can penetrate the engine block, the device of which is connected to a port into the engine block, in which the device comprises
an adapter body with the upper part having a peripheral wall which defines an inner space, said space forming a filler neck at the top thereof and containing support means for the closure plug,
a lower part which has an a inner axial channel which opens into said inner space and the lower end thereof being connected to a filler port,
said axial channel having an inner diameter that is greater than that of the measuring stick, but smaller than that of the inner space, and
the adapter body having fixing means for attaching said adapter body to the engine block.

This device provides the possibility , on one hand, of checking the oil level in the engine block by way of the oil filler port and to therefore to do away with any conventional filling opening machined into the engine block. On the other hand, the axial channel at the lower part of the adapter body makes the guiding of the measuring stick possible without any need of complicated handling operations on the part of the user and, therefore, an easy, proper insertion of the measuring stick inside the engine block.

In a preferred embodiment of the invention, the inner space of the adapter body narrows at the lower end into an intermediate part forming a funnel into which said inner channel of the lower part connects. Said funnel facilitates putting oil into the engine block and likewise the proper directioning of the measuring stick toward the inner channel of the lower part of the adapter body.

Preferably, the fixing means are complementary to complementary fixing elements arranged on the engine block. The fixing means may be one or more through openings for bolts or studs on the adapter body, and the fixing elements may be studs or threaded openings in the exterior of the engine block.

The lower part of the adapter body may be connected to the filler port to the engine block by means of a tube attached at one of its ends to the lower end of said lower part and, by the other of its ends, to said filler port. Alternatively, the adapter body may be connected to said filler port by means of a lower cylindrical part on the lower part of the adapter body, which is press-attached to the filler port to he engine block, inserting a flexible bushing in between surrounding the free end of said lower cylindrical part.

In a preferred embodiment of the invention, the device entails at least one side wing which extends coaxially to the adapter body and which emerges laterally to the adapter body from a position below said filler opening toward said lower part of the adapter body, the fixing means being located on said side wing. In this case, the fixing means may be through holes on the area underneath each wing. They may also be equipped with two side wings emerging laterally from opposite sides of the adapter body such that the horizontal extension, that is to say, the distance between the side edges of said side wings increases in the direction of the lower ends of said wings.

The containing support means, which serve for attaching to plug on the upper part of the filler neck of the adapter body, are complemented with containing supporting elements provided on the plug. These containing supporting means may be arranged around the inner perimeter of said perimetral wall of the upper part of the adapter body, or on a part emerging from the outer perimeter of said perimetral wall of the upper part of the adapter body.

When the containing support means are provided on the inside of the perimetral wall of the upper part of the adapter body, they may be a internal filleting for screwing the plug provided with a complementary filleting or may emulate the shape of the conventional containing means described hereinabove which are located on the filler openings of the conventional engine blocks, in which case the second containing elements of the plug may be lateral overhangs of dimensions such and arranged such that, on inserting the adapter body, they will fit in the spaces defined between the rims configuring the second containing means and, by means of a turn of the plug, are positioned and therefore contained under said rims. One advantage of this embodiment is that it allows the plug to be of a configuration which has many characteristics in common with the conventional block plugs, as a result of which, for the manufacture of the plug used in this embodiment, advantage can be taken of a large part of the moulds and processes already existing at a plant.

Preferably, the plug is also provided with a sealing ring joint positioned between the base of the plug and the upper edge of the perimetral wall of the adapter body. For this purpose, this joint may be connected in a conventional manner to the base of the plug.

In one embodiment of the plug of the invention, this plug consists of a closing body and an inner body which extends below the inner base of said closing body. In this case, the oil level measuring stick extends out below said inner body. The inner body and the closing body can be molded in one single part or may be separate pieces joined together in a known manner for plugs for combustion engine filling openings. Likewise, the oil level measuring stick and said closing body may be one single part, although in the event that it is advantageous to prevent the stick from turning when the closing body turns, it may be two separate elements configured such that the flat element of the closing body has a central opening through which the oil measuring stick penetrates, whilst the oil measuring stick has a perimetral rib at its upper end, between the base of the closing body and the upper face of the flat elements which is of a cross-section larger than said central opening. Therefore, the upper end is attached to the flat element, which, in turn, is attached to the plug closing body.

The device of this invention thus obviously overcomes the drawbacks of the state of the art by means of a simple, economic structure which is, in turn, easy to mount on engine blocks having conventional oil filler openings.

### BRIEF DESCRIPTION OF THE FIGURES

A description is provided in following as to different aspects of the invention according to some embodiments shown in the Figures, in which
figures 1a, 1b and 1c provide a diagram of an embodiment of the adapter body attached to an engine block;
figure 2 is a diagram, in lateral cross-section, of the adapter body according to one embodiment of the invention;
figure 3 is a top plan view of the embodiment of the adapter body shown in figure 1;
figure 4 is a diagram, in lateral cross-section, of one embodiment of the plug with the oil measuring stick according to one embodiment of the invention;
figure 5 is a bottom plan view of the embodiment of the adapter body shown in figure 3;

In these figures, a number of numerical references are shown which identify the elements listed in following:
- 1: adapter body ,
- 1a: upper part of the adapter body
- 1b: lower part of the adapter body
- 2: engine block
- 2a: engine block filler port
- 2b: fixing means
- 3: adapted body fixing means
- 4: perimetral wall of the upper part of the adapter body
- 5: inner space
- 5a: filler neck
- 5b: part in between inner space
- 6: containing support means
- 7: inner channel of the lower part of the adapter body
- 8: tube
- 9: flexible bushing
- 10: plug
- 10a: lower base of plug
- 11: oil measuring stick
- 11a: perimetral rib of oil measuring stick
- 12: plug support elements
- 13: plug closure body
- 13a: inner body
- 13b: central opening in inner body
- 14: side wings on adapter body
- 14a: side edges of side wings
- 15: sealing ring joint

### EMBODIMENT OF THE INVENTION

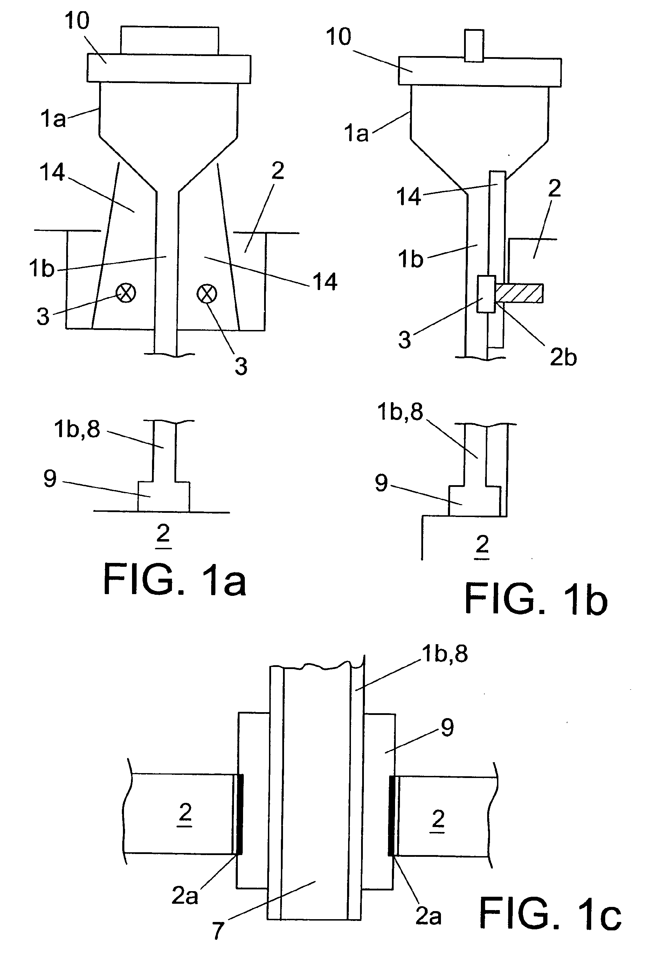

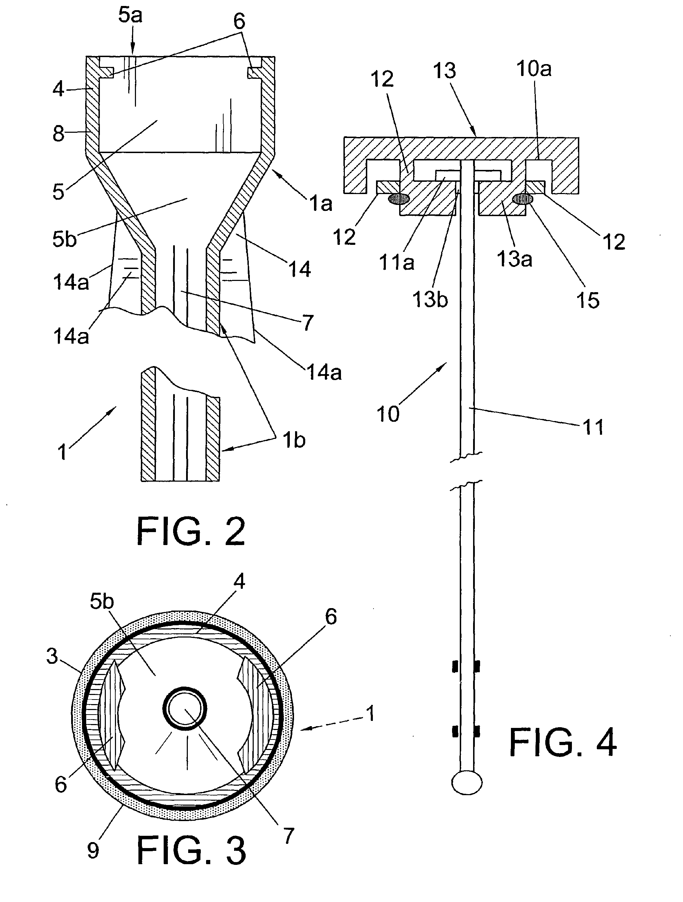

As can be seen in figures 1a, 1b, 1c and 2, the embodiment of the device shown therein includes an adapter body 1 with an upper part 1a which comprises a perimetral wall 4 which defines an inner space 5 equipped with containing support means 6 in the form of semicircular ribs which hold the closure plug 10 in place. The inner space 5 forms a filler neck 5a for the oil at the top.

The inner space 5 of the adapter body 1 narrows at the bottom into an intermediate part 5b which forms a funnel into which the inner channel 7 of the lower part 1b of the adapter body 1 connects.

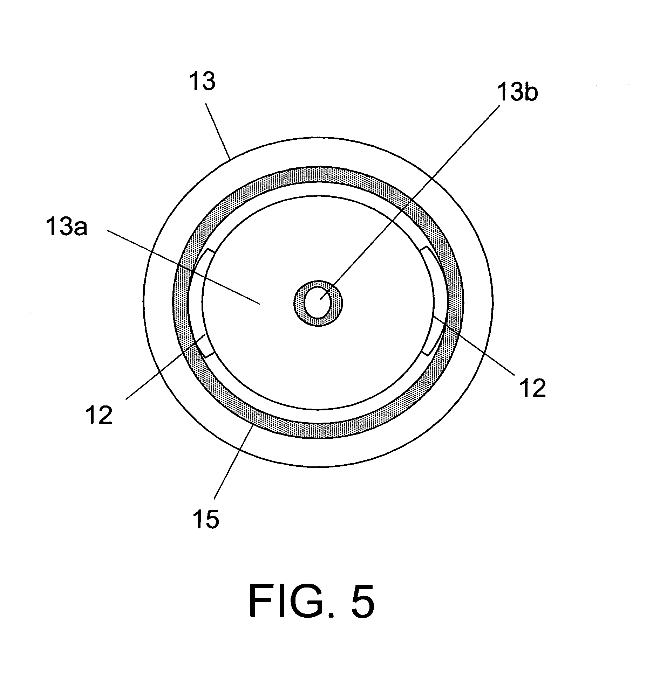

The containing support means 6 are semicircular ribs which extend from the inner periphery of the wall 4 to the exterior of the inner space 5 and are, as shown in figures 4 and 5, complementary to containing support elements in the form of tabs 12 which extend laterally on opposite sides of the inner body 13a of the plug 10.

These fixing means of the adapter body emulate the conventional fixing means used on the oil filler openings of the engine blocks.

The adapter body 1 has side wings 14 which extend coaxially to the adapted body 1 and which emerge laterally from opposite sides of the adapter body 1 from a position below said filler neck 1 toward said lower part 1b of the adapter body 1.

It can be seen that the distance between the side edges 14a of said side wings 14 increases in direction toward the lower ends of said wings 14 such that the lower edges of the wings 14 form an ample supporting base.

The fixing means 3 are located on these side wings 14 and are through holes through which a bolt 3 runs screwing into complementary fixing elements formed by each threaded holes 2b in the engine block 2.

The adapter body 1 also consists of a lower part 1b which has an axial inner channel 7 which connects at the upper end thereof with said inner space 5, and which is connected at the lower end to said filler port 2a.

The axial channel 7 has a inner diameter greater than the outer diameter of the oil measuring stick 11 but smaller than said inner space 5. Likewise, the adapter body 1 has fixing means in the form of bolts 3 for attaching said adapter body 1 to the engine block 2, which, in turn, has complementary fixing elements 2b in the form of a screw hole into which the bolts 3 are screwed.

The lower part 1b of the adapter body 1 is connected to the filler port 2a to the engine block 2 by way of a tube 8 connected at one of its ends to the lower end of said lower part 1b and at the other of its ends to said filler port 2a. This tube 8 is a lower extension, in the form of a cylindrical part, of the lower part 1b of the adapter body 1 and is press-fitted onto the filler port 2 a of the engine block 2 with a flexible bushing 9 placed in between which surrounds the free end of said lower cylindrical part. The flexible bushing may be made of a rubber material resistant to chemical agents.

As can be seen in figures 4 and 5, the plug 10 consists of a closure body 15 with a inner body 13a which extends below the inner base 10a of said closure body 13. The oil measuring stick 11 extends downward from said inner body 13a.

The closure body 13 has a central opening 13b through which the oil measuring stick 11 penetrated, which, at the upper end thereof, has a perimetral rib 11a situated between the base 10a of the closure body 13 and the upper face of the inner body 13a.

Given that the cross-section of the perimetral rib 11a is greater than the central opening 13b the stick 11 is held in place. On the lower part of the inner body 1a is a sealing ring joint 15 which, when the plug 10 is mounted on the adapter body 1, is pressed onto the upper edge of the perimetral wall 4 of the adapter body 1.

## Claims

1. A device for filling and checking the oil level in a combustion engine block comprising a closure plug from the lower face of which emerges an oil level measuring stick with extends from the lower face of said plug and which can penetrate the engine block, the device of which is connected to a filler port on the engine block, **characterized in that** the device further comprises
an adapter body (1) with an upper part (1a) comprising a peripheral wall (4) which defines an inner space (5) said space forming a filler neck (5a) at the top thereof and containing support means (6) which hold the closure plug (10) in place,
a lower part which has an inner axial channel (7) which connects at the top with said inner space (5) and which is connected at the bottom to said filler port (2a),
said axial channel (7) having an inner diameter that is greater than that of the measuring stick (11), but smaller than that of the inner space (5), and
the adapter body (1) having fixing means (3) for connecting said adapter body (1) to the engine block (2).

2. A closure device according to Claim 1, **characterized in that** the inner space (5) of the adapter body (1) narrows at the bottom into an intermediate part (5b) which forms a funnel to which said inner channel (7) of the lower part (1b) of the adapter body (1) connects.

3. A closure device according to Claim 1 or 2,
**characterized in that** the fixing means (3) are complementary to the complementary fixing elements (2b) situated on the engine block (2).

4. A device according to either Claim 1 or 3,
**characterized in that** the containing support means (6) are complementary to containing means (12) on said plug (10).

5. A device according to either Claim 1, 3 or 4,
**characterized in that** said containing support means (6) are situated on the outer perimeter of said perimetral wall (4) of the upper part (1a) of the adapter body (1).

6. A device according to either Claim 1, 3 or 4,
**characterized in that** said containing support means (6) on the upper part (1a) of the adapter body (1) which contain the plug (10) are situated on the inner perimeter of said perimetral wall (4).

7. A device according any of Claims 1 to 6, **characterized in that** the lower part (1b) of the adapter body (1) is connected to the filler port (2a) to the engine block (2) by way of a tube (8) connected by one of its ends to the lower end of said lower part (1b) and by the other of its ends, to said filler port (2a).

8. A device according to any of Claims 1 to 6,
**characterized in that** the lower part (1b) of the adapter body (1) extends below into a lower cylindrical part press-fit to the filler port (2a) of the engine block (2) with the insertion of a flexible bushing (9) which surround the free end of said lower cylindrical part.

9. A device according to Claim 1, **characterized in that** it consists of a sealing ring joint (15) situated between the base (10a) of the plug (10) and the upper edge of the perimetral wall (4) of the adapter body (1).

10. A device according to either Claim 1 or 9,
**characterized in that** the plug consists of a closure body (13) with an inner body (13a) which extends out below the interior base (10a) of said closure body (13), and because the oil measuring stick (11) extends out below said inner body (13a).

11. A device according to Claim 10, **characterized in that** the oil measuring stick (11) and said inner body (13a) are one sole part.

12. A device according to Claim 10, **characterized in that** the inner body (13a), the measuring stick (11) and the closure body (13) are connected to one another.

13. A device according to Claim 10, **characterized in that** the inner body (13a) of the closure body (13) has a central opening (13b) through which the oil measuring stick (11) penetrated, and because the oil measuring stick (11) has, at the upper thereof, a perimetral rib (11a) situated between the base of the closure body (13) and the upper face of the inner body (13a), said perimetral rib (11a) having a cross-section larger than said central opening (13b).

14. A device according to Claim 1 or 2, **characterized in that** it consists at least of one side wing (14) which extends coaxially to the adapter body (1) and which emerges laterally from the adapter body (1) from a position below said filler neck (5a) toward said lower part (1b) of the adapter body (1) and because the fixing means (3) are provided on said side wing (14).

15. A device according to Claim 14, **characterized in that** its consists of two side wings (14) which emerge laterally from opposite sides of the adapter body (1).

16. A device according to Claim 13, **characterized in that** the horizontal extension between the side edges (14a) of said side wings (14) increases in the direction toward the lower ends of said wings (14).
